(19) Europäisches Patentamt
European Patent Office
Office européen des brevets

(11) Publication number: **0 409 464 A2**

# (12) EUROPEAN PATENT APPLICATION

(21) Application number: **90307498.7**

(22) Date of filing: **09.07.90**

(51) Int. Cl.5: **C08L 59/04**, //(C08L59/04, 75:10)

(30) Priority: **20.07.89 US 382455**

(43) Date of publication of application: **23.01.91 Bulletin 91/04**

(84) Designated Contracting States: **BE DE FR GB IT NL**

(71) Applicant: **HOECHST CELANESE CORPORATION**
**Route 202-206 North**
**Somerville, New Jersey(US)**

(72) Inventor: **Collins, George L.**
**14 Oregon Street**
**Maplewood, New Jersey(US)**
Inventor: **Terrone, Diane M.**
**1956 Vermont Avenue**
**Toms River, New Jersey(US)**
Inventor: **Kim, Hongkyu**
**Mittelstedter Strasse 21**
**W-6370 Oberursel 4(DE)**
Inventor: **Pleban, William M.**
**8 Ridge Road**
**Stanhope, New Jersey(US)**

(74) Representative: **De Minvielle-Devaux, Ian Benedict Peter et al**
**CARPMAELS & RANSFORD 43, Bloomsbury Squareare**
**London WC1A 2RA(GB)**

## (54) Acetal polymer compositions of high impact strength.

(57) A composition is provided comprising a major amount of normally crystalline acetal polymer and lower amounts than said crystalline acetal polymer of a thermoplastic polyurethane and a normally non-crystalline acetal copolymer of monomers comprising about 15 to 45 mol % of trioxane and about 55 to 85 mol % of 1,3-dioxolane based on the total of trioxane and 1,3-dioxolane. The composition may be molded into articles having high impact strength.

EP 0 409 464 A2

# IMPROVED ACETAL POLYMER COMPOSITIONS OF HIGH IMPACT STRENGTH

## BACKGROUND OF THE INVENTION

### Field of the Invention

This invention relates to acetal polymer compositions having good impact properties and improved morphology.

Molding compositions comprising acetal polymers having a high degree of crystallinity at room temperature have been in commercial use for many years. They have application in a wide variety of end uses, e.g., automobile applications such as bumper extensions and instrument panels, plumbing supplies such as valves, shower assemblies, flush tank components, faucets and pipe fittings, tool components such as screw driver adaptors, and household and personal products, such as quick boiling electric water kettles.

These crystalline acetal polymers have a highly favorable spectrum of physical properties which are responsible for their wide commercial acceptance. However, for certain molding applications, e.g., exterior automobile body parts, molding compositions that impart higher than usual impact strength to articles molded from them are highly desirable.

### Description of Related Art

The following prior art references are disclosed in accordance with the terns of 37 CFR 1.56, 1.97 and 1.98.

U.S. Patent No. 4,707,525 issued November 17, 1987 to La Nieve et al., the entire disclosure of which is incorporated by reference, discloses molding compositions having improved impact strength comprising a blend of an acetal polymer with an elastomeric polyurethane.

U.S. Patent No. 4,665,126, issued May 12, 1987 to Kusumgar et al., discloses compositions having improved impact strength comprising a major amount of a crystalline acetal polymer and lower amounts than the acetal polymer of a thermoplastic polyurethane and a multiphase composite interpolymer.

U.S. Patent No. 3,639,192, issued February 1, 1972 to Burg et al., discloses for use as adhesives copolymers of formaldehyde or trioxane with 1 to 60% by weight, preferably 1 to 30% by weight, of a cyclic ether, cyclic and/or linear acetal, e.g., 1,3-dioxolane, and/or an alkyl glycidyl formal, polyglycol diglycidyl ether or bis (alkane triol) triformal. Example 5 discloses a terpolymer of 97.95 wt.% of trioxane, 2 wt.% of ethylene oxide, and 0.05 wt./00 of 1,4-butanediol diglycidyl ether (BDGE).

U.S. Patent No. 3,337,507, issued August 22, 1967 to Gutweiler et al., teaches the formation of high molecular weight copolymers obtained by polymerizing a mixture of trioxane and any of certain polyformals. Example 4 of the patent shows the use of a polyformal which is a clear highly viscous oil at 70 °C obtained by polymerizing a mixture of 1/3 mole of trioxane and 1. mole of dioxolane in the presence of p-nitrophenyl-diazonium fluoroborate as catalyst.

U.S. Patent No. 4,788,258, issued November 29, 1988 to Collins et al., discloses and claims low Tg acetal copolymers of trioxane and 65 to 75 mol % of 1,3-dioxolane, which are non-crystalline at room temperature and are contemplated for use in the compositions of this invention. Also disclosed and claimed are blends of a normally crystalline acetal polymer and the foregoing non-crystalline copolymer, having improved impact properties.

Japanese Kokai Sho 42-22065 of Yamaguchi et al., published October 30, 1967, discloses copolymers of trioxane and an aperiodic ring compound, e.g., 1,3-dioxolane, prepared in liquid sulfur dioxide, and in Example 1 shows a copolymer of trioxane and 64 mol % of 1,3-dioxolane.

Pending application Serial No. 243,381, filed September 12, 1988 by Collins et al., discloses and claims elastomeric copolymers of 15 to 45 mol % of trioxane, 55 to 85 mol % of dioxolane and a small amount of BDGE or butadiene diepoxide, which are non-crystalline at room temperature and are contemplated for use in the compositions of this invention, and states that they are useful as blending and adhesive agents for conventional crystalline acetal polymers. The entire disclosure of this application is incorporated by reference ( = P-A-359,451).

Pending application Serial No. 255,569 filed October 11, 1988 by Collins et al. discloses and claims bonded articles, e.g., of conventional crystalline acetal polymers, wherein the bonding agents are elastomeric, normally non-crystalline terpolymers contemplated for use in the compositions of this invention ( = EP-A-364,207).

Pending application Serial No. 333,511, filed April 5, 1989 by Wissbrun et al., discloses and claims blends of a conventional crystalline acetal polymer and an elastomeric, normally non-crystalline terpolymer of the type contemplated for use in the compositions of this invention ( = EP 90303594.7).

## SUMMARY OF THE INVENTION

In accordance with this invention, there are provided novel compositions comprising a major amount of a normally crystalline (25° C), moldable acetal polymer and lower amounts of a thermoplastic polyurethane, and a normally non-crystalline (25° C) acetal copolymer of monomers comprising about 15 to 45 mol %, preferably about 25 to 35 mol % of trioxane, about 55 to 85 mol %, preferably about 65 to 75 mol % of 1,3-dioxolane, said mole percents based on the total of trioxane and 1,3-dioxolane, and optionally, about 0.005 to 0.15 wt.%, preferably about 0.05 to 0.12 wt.%, of 1,4-butanediol diglycidyl ether (BDGE) or butadiene diepoxide as a bifunctional monomer, based on the total weight of copolymer. The latter copolymers, in addition to being substantially non-crystalline at room temperature (25° C), are also somewhat elastomeric if BDGE or butadiene epoxide is utilized as comonomer.

The presence of the non-crystal line acetal copolymer acts to control the morphology of blends of a crystalline acetal polymer and a thermoplastic polyurethane in a manner likely to improve the impact properties of the blend.

## DESCRIPTION OF PREFERRED EMBODIMENTS

### The Crystalline Acetal Polymer

The moldable, crystalline acetal polymers whose performance is capable of being improved by blending with the contemplated thermoplastic polyurethane and non-crystalline acetal copolymer include any oxymethylene polymer in which the oxymethylene groups comprise at least about 85 percent of the polymer's recurring units, i.e., homopolymers, copolymers, terpolymers and the like.

Typically, crystalline oxymethylene homopolymers, also called polyformaldehydes or poly-(oxymethylenes), are prepared by polymerizing anhydrous formaldehyde or trioxane, a cyclic trimer of formaldehyde. For example, high molecular weight polyoxymethylenes have been prepared by polymerizing trioxane in the presence of certain fluoride catalysts, such as antimony fluoride. Polyoxymethylenes may also be prepared in high yields and at rapid reaction rates by the use of catalysts comprising boron fluoride coordination complexes with organic compounds, as described in U.S. Patent No. 2,898,506 to Hudgin et al.

Oxymethylene homopolymers are usually stabilized against thermal degradation by end-capping with, for example, ester or ether groups such as those derived from alkanoic anhydrides, e.g., acetic anhydride, or dialkyl ethers, e.g., dimethyl ether, or by incorporating stabilizer compounds into the homopolymer, as described in U.S. Patent No. 3,133,896 to Dolce et al.

Crystalline oxymethylene copolymers which are especially suitable for utilization with the elastomeric copolymers of this invention will usually possess a relatively high level of polymer crystallinity, i.e., about 60 to 50 percent or higher. These preferred oxymethylene copolymers have repeating units which consist essentially of oxymethylene groups interspersed with oxy(higher)-alkylene groups represented by the general formula:

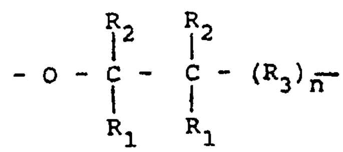

wherein each $R_1$ and $R_2$ is hydrogen or a lower alkyl group, each $R_3$ is a methylene, oxymethylene, lower alkyl-substituted methylene or lower alkyl-substituted oxymethylene group, and n is an integer from zero to three, inclusive. Each lower alkyl group preferably contains one or two carbon atoms.

Oxymethylene groups generally will constitute from about 85 to about 99.9 percent of the recurring units in such crystalline copolymers. The oxy-(higher)alkylene groups incorporated into the copolymer during copolymerization produce the copolymer by the opening of the ring of a cyclic ether or cyclic formal having at least two adjacent carbon atoms, i.e., by the breaking of an oxygen-to-carbon linkage.

Crystalline copolymers of the desired structure may be prepared by polymerizing trioxane together with from about 0.1 to about 15 mol percent of a cyclic ether or cyclic formal having at least two adjacent carbon atoms, preferably in the presence of a catalyst such as a Lewis acid (e.g., $BF_3$, $PF_5$, and the like) or other acids (e.g., $HC10_4$, 1% $H_2SO_4$, and the like), ion pair catalysts, etc.

In general, the cyclic ethers and cyclic formals employed in making these preferred crystalline oxymethylene copolymers are those represented by the general formula:

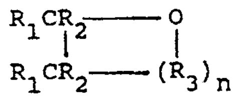

wherein each $R_1$ and $R_2$ is hydrogen or a lower alkyl group, each $R_3$ is a methylene, oxymethylene, lower alkyl-substituted methylene or lower alkyl-substituted oxymethylene group, and n is an integer from zero to three, inclusive. Each lower alkyl group preferably contains one or two carbon atoms.

The cyclic ether and cyclic formal preferred for use in preparing these preferred crystalline oxymethylene copolymers are ethylene oxide and 1,3-dioxolane, respectively. Among the other cyclic ethers and cyclic formals that may be employed are 1,3-dioxane, trimethylene oxide, 1,2-propylene oxide, 1,2-butylene oxide, 1,3-butylene oxide, 1,4-butanediol formal, and the like.

Crystalline oxymethylene copolymers produced from the preferred cyclic ethers have a structure composed substantially of oxymethylene and oxy-(lower)alkylene, preferably oxyethylene, groups, and are thernoplastic materials having a melting point of at least 150° C. They normally are millable or processable at temperatures ranging from 180° C to about 200° C, and have a number average molecular weight of at least 10,000 and an inherent viscosity of at least 1.0 (measured at about 25° C in a 0.2 wt.% solution in hexafluoroisopropanol).

These crystalline oxymethylene copolymers preferably are stabilized to a substantial degree prior to being utilized with the elastomeric copolymers of this invention. This can be accomplished by degradation of unstable molecular ends of the polymer chains to a point where a relatively stable carbon-to-carbon linkage exists at each end of each chain. Such degradation may be effected by hydrolysis, as disclosed, for example, in U.S. Patent No. 3,219,623 to Berardinelli.

The crystalline oxymethylene copolymer may also be stabilized by end-capping, again using techniques well known to those skilled in the art. End-capping is preferably accomplished by acetylation with acetic anhydride in the presence of sodium acetate catalyst.

A particularly preferred class of crystalline oxymethylene copolymers is commercially available from Hoechst Celanese Corporation under the designation CELCON acetal copolymer, and especially preferred are copolymers of trioxane with 1.7-2.0 wt.% of ethylene oxide marketed as CELCON M25, M90 and M270 acetal copolymers, which have melt indexes of about 2.5, 9.0 and 27.0 g/10 min. respectively when tested in accordance with ASTM D1238-82.

Crystalline oxymethylene terpolymers having oxymethylene groups, oxy(higher)alkylene groups such as those corresponding to the above-recited general formula:

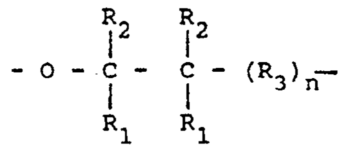

and a different, third group interpolymerizable with oxymethylene and oxy(higher)alkylene groups may be prepared, for example, by reacting trioxane, a cyclic ether or cyclic acetal and, as the third monomer, a bifunctional compound such as diglycide of the formula:

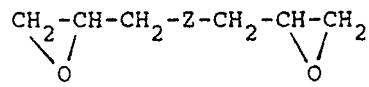

wherein Z represents a carbon-to-carbon bond, an oxygen atom, an oxyalkoxy group of 1 to 8 carbon atoms, inclusive, preferably 2 to 4 carbon atoms, an oxycycloalkoxy group of 4 to 8 carbon atoms, inclusive, or an oxypoly(lower alkoxy)group, preferably one having from 2 to 4 recurring lower alkoxy groups each with 1 or 2 carbon atoms, for example, ethylene diglycide, diglycidyl ether and diethers of 2 mols of glycide and 1 mol of an aliphatic diol with 2 to 8 carbon atoms, advantageously 2 to 4 carbon atoms, or a cycloaliphatic diol with 4 to 8 carbon atoms.

Examples of suitable bifunctional compounds include the diglycidyl ethers of ethylene glycol; 1,4-butanediol; 1,3-butanediol; cyclobutane-1,3-diol; 1,2-propanediol; cyclohexane-1,4-diol and 2,2,4,4-tetramethylcyclobutane-1,3-diol, with butanediol diglycidyl ethers being most preferred.

Generally, when preparing such crystalline terpolymers, ratios of from 99.89 to 89.0 wt.% trioxane, 0.1 to 10 wt.% of the cyclic ether or cyclic acetal and 0.01 Co 1 wt.% of the bifunctional compound are preferred, these percentages being based on the total weight of monomers used in forming the terpolymer. Ratios of from 99.85 to 89.5 wt.% of trioxane, 0.1 to 10 wt.% of cyclic ether or cyclic acetal and 0.05 to 0.5 wt.% of diglycidyl ether are particularly preferred, these percentages again being based on the total weight of monomers used in forming the terpolymer.

Terpolymer polymerization in preparing the contemplated crystalline terpolymers may be carried out according to known methods of solid, solution or suspension polymerization. As solvents or suspending agents, one may use inert aliphatic or aromatic hydrocarbons, halogenated hydrocarbons or ethers.

Trioxane-based terpolymer polymerization is advantageously carried out at temperatures at which trioxane does not crystallize out, that is, at temperatures within the range of from about 65° C to about 100° C.

Cationic polymerization catalysts, such as organic or inorganic acids, acid halides and, preferably, Lewis acids, can be used in preparing the crystalline terpolymers. Of the latter, boron fluoride and its complex compounds, for example, etherates of boron fluoride, are advantageously used. Diazonium fluoroborates are particularly advantageous.

Catalyst concentration may be varied within wide limits, depending on the nature of the catalyst and the intended molecular weight of the crystalline terpolymer. Thus, catalyst concentration may range from about 0.0001 to about 1 wt.%, and preferably will range from about 0.001 to about 0.1 wt.%, based on the total weight of the monomer mixture.

Since catalysts tend to decompose the crystalline terpolymer, the catalyst is advantageously neutralized immediately after polymerization using, for example, ammonia or methanolic or acetonic amine solutions.

Unstable terminal hemiacetal groups may be removed from the crystalline terpolymers in the same manner as they are from other oxymethylene polymers. Advantageously, the terpolymer is suspended in aqueous ammonia at temperatures within the range of from about 100° C to about 200° C, if desired in the presence of a swelling agent such as methanol or n-propanol. Alternatively, the terpolymer is dissolved in an alkaline medium at temperatures above 100° C and subsequently reprecipitated. Suitable alkaline media include benzyl alcohol, ethylene glycol monoethyl ether, or a mixture of 60 wt.% methanol and 40 wt.% water containing ammonia or an aliphatic amine.

The crystalline terpolymers may also be thermally stabilized by degrading unstable molecular ends of their chains to a point where a relatively stable carbon-to-carbon linkage exists at each end of each chain. Thermal stabilization will preferably be carried out in the absence of a solvent in the melt, in the presence of a thermal stabilizer.

Alternatively, the crystalline terpolymer can be subjected to heterogeneous hydrolysis wherein water, with or without a catalyst, e.g., an aliphatic or aromatic amine, is added to a melt of the terpolymer in an amount ranging from about 1 to about 50 percent by weight, based on the weight of the terpolymer. The resulting mixture is maintained at a temperature in the range of from about 170° C to 250° for a specified period of time, and then washed with water and dried or centrifuged.

A preferred crystalline oxymethylene terpolymer is commercially available from Hoechst Celanese Corporation under the designation CELCON U10 acetal polymer, and is a butanediol diglycidyl ether/ethylene oxide/trioxane terpolymer containing about 0.05 wt.%, 2.0 wt.%, and 97.95 wt.% of repeating units derived from these termonomers, respectively, based on the total weight of these termonomers.

Additives such as plasticizers, formaldehyde scavengers, mold lubricants, antioxidants, fillers, colorants, reinforcing agents, light stabilizers and other stabilizers, pigments, and the like, can be used with the polymer blends of this invention so long as such additives do not materially affect the desired properties of the compositions of this invention, particularly enhancement of impact strength. Such additives can be admixed with any of the polymer components of the composition, or the composition itself, using conventional mixing techniques.

Suitable formaldehyde scavengers include cyanoguanidine, melamine and melamine derivatives, such as lower alkyl- and amine-substituted triazines, amidines, polyamides, ureas, metal oxides and hydroxides, such as calcium hydroxide, magnesium hydroxide, and the like, salts of carboxylic acids, and the like. Cyanoguanidine is the preferred formaldehyde scavenger. Suitable mold lubricants include alkylene bisstearamides, long-chain amides, waxes, oils, and polyether glycides. A preferred mold lubricant is commercially available from Glycol Chemical, Inc. under the designation Acrawax C, and is N,N′-ethylene bisstearamide. The preferred antioxidants are hindered bisphenols. Especially preferred is 1,6-hexamethylene bis-(3′,5′-di-t-butyl-4′-hydroxyhydrocinnamate), commercially available from Ciba-Geigy Corp. under the designation Irganox 259.

Suitable compounded crystalline oxymethylene two component copolymers for use in the compositions of this invention are commercially available from Hoechst Celanese Corporation under the designations CELCON M25-04, M90-04 and M270-04 acetal polymers. These are the previously mentioned CELCON M25, M90 and M270 acetal copolymers respectively, each stabilized by 0.5 percent by weight Irganox 259, 0.1 percent by weight cyanoguanidine, and 0.2 percent by weight Acrawax C.

A suitable compounded crystalline oxymethylene terpolymer for use in the compositions of this invention is commercially available from Hoechst Celanese Corporation under the designation CELCON U10-11 acetal polymer. This is the

previously mentioned CELCON U10 acetal terpolymer stabilized by 0.5 percent by weight Irganox 259 and 0.1 percent by weight calcium ricinoleate.

## The Thermoplastic Polyurethane

The thermoplastic polyurethane may be any of those used and generally known in the art.

Suitable thermoplastic polyurethanes useful in the invention are those prepared from a diisocyanate, a polyester or polyether and a chain extender. These thermoplastic polyurethanes are those which are substantially linear and maintain thermoplastic processing characteristics.

A preferred group of polyether-based polyurethanes used in the molding composition of the present invention are the reaction products of:

(i) 4,4′-methylenebis(phenyl isocyanate),

(ii) polyoxytetramethylene glycol having a molecular weight within the range of about 1500 to 3000, and

(iii) a diol extender selected from the group consisting of aliphatic straight chain diols having from 2 to about 6 carbon atoms, bis(2-hydroxyethyl) ether of hydroquinone, bis(2-hydroxyethyl) ether of resorcinol, and mixtures of any two or more of such diol extenders.

This class of polyether-based polyurethanes is disclosed in previously cited U.S. Patent No. 4,707,525.

Preferably, the polyoxytetramethylene glycol has a molecular weight within the range of about 2000 to about 2900.

The molecular weight of the polyoxytetramethylene glycol as used herein is a number average molecular weight. In addition to using polyoxytetramethylene glycols within the specified molecular weight ranges, it is also within the scope of the present invention to blend lower or higher molecular weight polyoxytetramethylene glycols with other molecular weight polyoxytetramethylene glycols so that the molecular weight of the final blend is within the above specified molecular weight ranges.

The term "aliphatic straight chain diols having from 2 to about 6 carbon atoms" means diols of the formula $HO(CH_2)_nOH$ wherein n is 2 to about 6 and there is no branching in the aliphatic chain separating the OH groups. The term is inclusive of ethylene glycol, 1,3-propanediol, 1,4-butanediol, 1,5-pentanediol and 1,6-hexanediol.

The preferred diol extenders are 1,4-butanediol, 1,6-hexanediol and the bis(2-hydroxyethyl) ether of hydroquinone, the most preferred diol extender being 1,4-butanediol.

The polyoxytetramethylene glycol and diol extender are used in the polyurethane reaction medium in a ratio of about 0.5 to about 2.5 equivalents (e.g., mole equivalents) of the diol extender per equivalent of the glycol. Preferably, the equivalents ratio is from about 1 to about 2. Most preferably the ratio is from about 1.2 to about 1.6 equivalents of diol extender per equivalent of the glycol when the polyoxytetramethylene glycol has a molecular weight of about 2000, and especially when the diol extender is an aliphatic straight chain diol. When the hydroquinone or resorcinol extender is used, the equivalents ratio may be lower than the above-mentioned preferred ranges, for example, as low as about 0.5 equivalent of the extender per equivalent of the glycol.

Regardless of the particular reaction method which is chosen in preparing the foregoing polyether-based polyurethanes, the hydroxyl components (i. e., the polyoxytetramethylene glycol and the diol extender) and the diisocyanate are used such that the overall ratio of isocyanate equivalents or groups to total hydroxyl equivalents or groups (glycol plus diol extender) is within the range of about 1:1 to about 1.08:1.0, and preferably is within the range of about 1.02:1.0 to about 1.07:1.0. The most preferred ratio of isocyanate (NCO) groups to total hydroxyl (OH) groups is within the range of from about 1.03:1.0 to about 1.06:1.0.

The term "equivalent(s)" as used with respect to the polyurethane preparation in the present specification and claims is based on the hydroxyl and isocyanate groups of the reactants.

An especially preferred polyether-based, thermoplastic polyurethane for use in the acetal polymer molding compositions of the present invention is prepared by reacting 1.0 equivalent of polyoxytetramethylene glycol having a molecular weight of about 2000 with I.S equivalents of 1,4-butanediol and 2.63 equivalents of 4,4′-methylenebis(phenyl isocyanate). This polyurethane is sold by Upjohn Company under the trademark "Pellethane X0157-75A" when admixed with 0.25 percent by weight of N,N′-ethylene bisstearmide (lubricant) sold under the trademark "Advawax 280," by Cincinnati Milacron Chemicals, Inc., and 0.25 percent by weight tetrakis [methylene 3-(3′,5′-d-tert-butyl-4′-hydroxyphenyl) propionate] methane (antioxidant) sold under the trademark "Irganox 1010," by Ciba-Geigy Corp. The weight percent of the additives are based on the total weight of the polyurethane reactants.

The polyether-based polyurethanes contemplated for use in the present invention can be prepared by processes which are conventional in the art of the synthesis of thermoplastic polyurethanes. Illustrative of such processes are

those described in U.S. Patent Nos. 3,493,634; 4,169,196; 4,202,957; and 3,642,964. Such processes include the one-shot procedure in which all the reactants are brought together simultaneously, and the prepolymer procedure in which the isocyanate is reacted with the polyoxytetramethylene glycol in a first step and the isocyanate terminated prepolymer so produced is subsequently reacted with the diol extender. The one-shot process also includes the process in which the diisocyanate has been converted to a quasiprepolymer by reaction with a very minor amount (i.e., less than about 10 percent on an equivalent basis) of the glycol prior to carrying out the polyurethane forming reaction. The one-shot is the preferred procedure for preparing the thermoplastic polyether-based polyurethanes of the present invention. In a most preferred embodiment, the polyurethanes are prepared by a continuous one-shot procedure such as that set forth in U.S. Patent No. 3,642,964.

In the one-shot procedures (including continuous one-shot procedure) the reactants are brought together in any order. Advantageously, the polyoxytetramethylene glycol and the diol extender are preblended and fed to the reaction zone as a single component, the other major component being the diisocyanate (or quasiprepolymer where used). The mixing and reaction of the reactants can be accomplished by any of the procedures and apparatus conventional in the art. Preferably, the individual components or reactants are rendered substantially free from the presence of extraneous moisture using conventional procedures, for example, by azeotropic distillation using benzene, toluene, and the like, or by heating under reduced pressure at a temperature above the boiling point of water at the pressure employed. As is well known by those skilled in the art, water will interfere with the polyurethane reaction by reacting with the diisocyanate and the resulting polyurethane. Thus, moisture levels as low as practical are desired, typically well below 0.1 percent by weight of the total reactants, and more preferably below 0.05 weight percent and even lower.

Advantageously, in a one-shot batch procedure, the heated hydroxyl components either alone or preferably together, are subjected to degassing in order to remove residual moisture, entrained bubbles of air or other gases before the polyurethane reaction takes place. This degassing is accomplished conveniently by reducing the pressure under which the components are maintained until no further evolution of bubbles occurs. Typically, such degassing takes from about 1 to about 3 hours at about 85°C to about 110°C. The hydroxyl components are preferably stirred during degassing. The degassed hydroxyl components are then admixed with the diisocyanate (or quasiprepolymer where used), which is typically at about 60°C. The resulting degassed mixture is then reacted, with stirring, to form the thermoplastic polyurethane. The polyurethane reaction is exothermic.

Reaction temperatures typically range from about 80°C to about 200°C or higher.

The resulting polyurethane is then transferred to suitable molds or extrusion equipment or the like and cured at a temperature on the order of about 20°C to about 115°C. The time required for curing will vary with the temperature of curing and also with the nature of the particular composition. The time required in any given case can be determined by a process of trial and error. Typically, the polyether-based polyurethanes of the present invention may be cured at about 100°C for about 1 hour and at about 20°C to about 23°C for 24 hours when a one-shot batch procedure is used.

It is frequently desirable but not essential to include a catalyst in the reaction mixture employed to prepare the polyurethane compositions of the present invention. Any of the catalysts conventionally employed in the art to catalyze the reaction of an isocyanate with a reactive hydrogen-containing compound can be employed for this purpose; see, for example, Saunders et al., Polyurethanes, Chemistry and Technology, Part 1, Interscience, New York, 1963, pages 228-232; see also Britain et al., J. Applied Polymer Science, 4, 207-211, 1960. Such catalysts include organic and inorganic acid salts of, and organometallic derivatives of, bismuth, lead, tin, iron, antimony, uranium, cadmium, cobalt, thorium, aluminum, mercury, zinc, nickel, cerium, molybdenum, vanadium, copper, manganese and zirconium, as well as phosphines and tertiary organic amines. Representative organotin catalysts are stannous octoate, stannous oleate, dibutyltin dioctoate, dibutyltin diluarate, and the like. Representative tertiary organic amine catalysts are triethylamine, triethylenediamine, N,N,N',N'-tetramethyl-ethylenediamine, N,N,N',N'-tetraethylethylenediamine, N-methyl-morpholine, N-ethylmorpholine, N, N, N', N'-tetramethylguanidine, N,N,N',N'-tetramethyl-1,3-butanediamine, N,N-dimethylethanolamine, N,N-diethylethanolamine, and the like. The amount of catalyst employed is generally within the range of about 0.002 to about 2.0 percent by weight based on the total weight of the polyurethane reactants.

When the polyether-based thermoplastic polyurethane is prepared by the less preferred prepolymer method, the diisocyanate and the polyoxytetramethylene glycol (in whole or in part) are reacted, if desired, in the presence of a catalyst as defined above, in a preliminary stage to form an isocyanate-terminated prepolymer. The proportions of diisocyanate and glycol employed in the preparation of this prepolymer are consistent with the ranges defined above. The diisocyanate and the glycol are preferably rendered substantially free from the presence of extraneous moisture, using the methods described above, before the formation of the prepolymer is carried out. The formation of the prepolymer is advantageously carried out at a temperature within the range of about 70°C to about 130°C under an inert atmosphere such as nitrogen gas in accordance with conventional procedures. The prepolymer so formed can then be reacted at any desired time, with the extender diol (and the balance, if any, of polyoxytetramethylene glycol not reacted with the diisocyanate in the first stage) to form the thermoplastic polyurethanes utilized in the present invention. This reaction is carried out advantageously within the range of reaction temperatures specified above for the one-shot procedure. In general, the prepolymer and the diol extender (preferably degassed as described above) are mixed and heated within the requisite temperature range and then transferred to suitable molds, extrusion apparatus, or the like, and cured as described above for the one-shot procedure.

The polyether-based thermoplastic polyurethanes used in the present invention are characterized by a Clash-Berg modulus ($T_f$) which is less than about -40°C and preferably a $T_f$ of less than about -60°C. The $T_g$ (glass transition temperature) of the polyurethanes is essentially the same value. The polyether-based polyurethanes may suitably have, for example, a Shore A Hardness of 95A or less, and a weight average molecular weight in excess of 100,000.

A preferred group of thermoplastic polyester-based polyurethanes for use in the present invention are the reaction products of:

(i) 4,4′-methylenebis (phenyl isocyanate);

(ii) a polyester of adipic acid and a glycol having at least one primary hydroxyl group; and

(iii) a diol chain extender.

The foregoing class of polyester-based polyurethanes is disclosed for example in U.S. Patent No. 4,179,479, the entire disclosure of which is incorporated by reference.

In preparing the polyester precursor of this group of polyurethanes, the adipic acid is condensed with a suitable glycol or mixture of glycols which have at least one primary hydroxyl group. The condensation is stopped when an acid number of from about 0.5 to about 2.0 is reached. The water formed during the reaction is removed simultaneously therewith or subsequently thereto such that the final water content is from about 0.01 to about 0.02%, preferably from about 0.01 to 0.05%.

Any suitable glycol may be used in reaction with the adipic acid such as, for example, ethylene glycol, propylene glycol, butylene glycol, hexanediol, bis-(hydroxymethylcyclohexane), 1,4-butanediol, diethylene glycol, 2,2-dimethyl propylene glycol, 1,3-propylene glycol and the like. In addition to the glycols, a small amount of trihydric alcohol up to about 1% may be used along with the glycols such as, for example, trimethylolpropane, glycerine, hexanetriol and the like. The resulting hydroxyl polyester has a molecular weight of at least about 600, a hydroxyl number of about 25 to about 190 and preferably between about 40 and about 60, an acid number of between about 0.5 and about 2, and a water content of 0.01 to about 0.2%.

Any suitable diol chain extending agent having active hydrogen-containing groups reactive with isocyanate groups may be used such as, for example, diols including ethylene glycol, propylene glycol, butylene glycol, 1,4-butanediol, butenediol, butynediol, xylylene glycols, amylene glycols, 1,4-phenylene-bis-β-hydroxy-ethyl ether, 1,3-phenylene-bis-β-hydroxy ethyl ether, bis-(hydroxymethyl-cyclohexane), hexanediol, thiodiglycol and the like.

The thermoplastic polyether-based polyurethanes contemplated for us in this invention may be prepared by any of the methods disclosed, for example, in U.S. Patents Nos. 3,214,411 and 4,179,479. In one type of procedure the polyester, diisocyanate and chain extender are individually heated preferably to a temperature of from about 60°C to about 135°C and then the polyester and chain extender are substantially simultaneously mixed with the diisocyanate. This method is preferred for the reason that the extender and the polyester will not react prior to the introduction of the diisocyanate and rapid mixing with the diisocyanate is thus facilitated. The mixing of the polyester, the chain extender and diisocyanate may be suitably carried out by using any mechanical mixer such as one equipped with a stirrer which results in intimate mixing of the three ingredients in a short period of time. If the material begins to become too thick, either the temperature may be lowered or a small amount of citric acid or the like of from about 0.001 to about 0.050 part by weight based on 100 parts of the polyester may be added to slow down the reaction. Of course, to increase the rate of reaction, any suitable catalyst may be added to the reaction mixture such as tertiary amines and the like as set forth in U.S. Patent Nos. 2,620,516, 2,621,166 and 2,729,618. The reaction mixture, after complete mixing, is conducted onto a suitable heated surface or poured onto a table or conveyor and preferably maintained at a temperature of from about 60°C to about 135°C until it solidifies, e.g., into a slab, so that it is still a thermoplastic and can be easily removed and reduced to the desired particle size. To facilitate the ready removal of the material from the hot plate, the table, conveyor or other surface, the slab or other physical form may be cut or scored while it is still soft to permit removal in a number of pieces rather than a unit. This cutting or scoring is best done while the reaction mixture is still soft, for when the material hardens it becomes difficult to cut although it can still be readily reduced in size by grinders, choppers and other equipment known in the industry.

After the reaction mixture has reacted to form a hard product which is suitable for cutting, chopping or grinding, it is cooled to room temperature. This material may then be either stored for several weeks, if desired, or it may be immediately blended with the crystalline acetal polymer and the non-crystalline acetal copolymer 'to form the compositions of the invention. Most preferably, the polyurethanes useful in the present invention have Shore hardnesses (ASTM D2240) between about 70 on the "A" scale and 60 on the "D" scale.

If desired, the thermoplastic polyurethane of the present invention can have incorporated in it, at any appropriate stage of preparation, and before blending with the acetal polymers, additives such as pigments, fillers, lubricants, stabilizers, antioxidants, coloring agents, fire retardants, and the like, which are commonly used in conjunction with thermoplastic polyurethanes.

## The Non-Crystalline Acetal Copolymer

Two main categories of non-crystalline acetal copolymers are contemplated for use in the polymer blends of this invention--two component copolymers prepared by copolymerizing monomers consisting of about 15 to 45 mol %, preferably about 25 to 35 mol %, of trioxane and about 55 to 85 mol %, preferably about 65 to 75 mol %, of 1,3-dioxolane based on the total of trioxane and 1,3-dioxolane; and terpolymers prepared by copolymerizing trioxane and dioxolane in amounts within the foregoing ranges together with about 0.005 to 0.15 wt.%, preferably about 0.05 to 0.12 wt.%, of 1,4-butanediol diglycidyl ether (BDGE) or butadiene diepoxide as a bifunctional monomer. In some instances, the non-crystalline acetal copolymer will contain somewhat different percentages of polymerized 1,3-dioxolane, e.g., up to 80 wt.%, and polymerized trioxane, e.g., as low as 20 wt.%, than the percentages of 1,3-dioxolane and trioxane respectively employed in the initial monomeric mixture.

The monomers used in the preparation of the non-crystalline acetal copolymers utilized in the compositions of this invention are preferably fairly dry, i.e. contain no more than about 10 ppm of water. The monomers are dried using techniques well known in the art, e.g., azeotropic distillation with benzene or by distilling the monomer in contact with sodium or potassium metal onto activated molecular sieves and keeping the monomer in contact with circulating nitrogen which itself is dried by contact with $P_2O_5$.

The non-crystalline acetal copolymers may be formed by a process of bulk polymerization wherein appropriate amounts of dry 1,3-dioxolane and, if used, 1,4-butanediol diglycidyl either (BDGE) or butadiene diepoxide, are added to dry molten trioxane to form a polymerizable mixture which in most cases remains liquid at room temperature. The polymerization reaction is carried out under an inert atmosphere, e.g., one obtained using dry nitrogen, argon, or the like, or a mixture of inert gases, in the presence of a catalytically effective amount of a cationic polymerization catalyst, such as p-nitrobenzenediazonium tetrafluoroborate (PNDB), trifluoromethane sulfonic acid, boron trifluoride, a boron trifluoride etherate such as boron trifluoride dibutyletherate, or the like, e.g., an amount ranging, for example, from about $1 \times 10^{-1}$ M/l to about $5 \times 10^{-3}$ M/l, and preferably from about $1 \times 10^{-3}$ M/l to about $1.5 \times 10^{-3}$ M/l, based on the volume of the reaction medium, i.e., reactants plus any solvents, suspending agents or other additives employed.

If PNDB is used as the catalyst, it is often convenient to add it as a solution, e.g., of about 5 to 10 wt.%, in nitromethane.

The polymerization reaction for the preparation of the non-crystalline acetal copolymers is carried out, for example, at a temperature of from about 15 to about 30 °C, and preferably at from about 20 to about 25 °C, at pressures ranging from about 750 to about 770 psi, for about 15 to about 30 hours, preferably about 20 to about 25 hours.

These polymers can also be prepared under the foregoing conditions by polymerizing the monomers in a solvent, solvent mixture or suspending agent for the monomers, e.g., a halogenated hydrocarbon such as methylene chloride, a hydrocarbon such as hexane, cyclohexane, nonane or dodecane, or the like, or a mixture of two or more of these or other suitable solvents or suspending agents.

In addition to the monomers mentioned previously, the monomer mixture used to prepare the non-crystalline acetal copolymers may contain minor amounts or related monomers, e.g., up to about 5 mol % of other cyclic formals, e.g., ethylene oxide or 1,4-butanediol formal, and up to about 1 wt.% of other bifunctional monomers, e.g., diglycidyl ethers of ethylene glycol and higher alkanediols other than 1,4-butanediol.

The non-crystalline acetal copolymers will in most cases have an inherent viscosity of about 0.7 to 2.75, measured at 25° C in a 0.2 wt.% solution in hexafluoroisopropanol (HFIP). The state of these copolymers at room temperature (25° C) can range from viscous liquids to dry or tacky solids. If solid, they are substantially non-crystalline in the unstretched state at room temperature (25° C), as indicated by differential scanning calorimetry (DSC) data.

A particularly suitable group of non-crystalline two-component acetal copolymers in the blends of this invention are those prepared from monomers consisting of 25 to 35 mol % of trioxane and 65 to 75 mol % of dioxolane and having an inherent viscosity (IV) of about 1.0 to 2.3, preferably above 1.0, such as 1.5 or 2.0. The copolymers in many cases have glass transition temperatures below about -60° C, e.g., about -65° C, and are non-crystalline at temperatures substantially below room temperature.

The non-crystalline acetal terpolymers previously described have enhanced elastomeric properties over a wide temperature range. For example, in most cases they can be formed into a ball that will hold its shape and will not collapse under its own weight after an extended period. Furthermore, the terpolymers can usually be stretched in the fashion of a rubber band and substantially recover their previous length when released. When the non-crystalline terpolymers are subjected to a standard oscillatory flow test at an elevated temperature, e.g., 190° C, they are shown to largely retain their properties of elasticity and viscosity. Thus, they are particularly suitable for being processed in blends with moldable crystalline acetal polymers at temperatures close to or above the melting points of the latter polymers for the purpose of improving the morphology of the blends.

The novel blends of this invention may be prepared by any conventional procedure that will result in a satisfactory blend or admixture of the three polymer components. The non-crystalline acetal copolymer can be mixed with the other polymeric components (in the form of pellets, chips, flakes, granules or powder), typically at room temperature (about 25° C), and the resulting mixture melt blended in any conventional type extrusion equipment, which is customarily heated to a temperature of from about 170° C to about 220° C, and preferably from about 190° C to about 218° C. Most preferably, a temperature of at least 210° C is used when the crystalline acetal polymer and thermoplastic polyurethane are being blended, although lower temperatures within the foregoing ranges can be used to first blend the non-crystalline acetal copolymer with either of the other polymeric components. However, the sequence of addition of the components is generally not critical, and any conventional means may be used to form the final blend, although it may be advantageous in some instances to alter the rheology of the thermoplastic polyurethane by first blending the non-crystalline acetal copolymer with such polyurethane and then compounding the resulting two-component blend with a premelted crystalline acetal polymer.

Preferably, the three polymer components of the blend are dried (either individually or together) before being subjected to the blending procedure. Drying can be done in desiccated air having a dew point of about -30° C to -40° C or lower, at a temperature of from about 70° C to about 110° C. The drying time will depend primarily on the moisture content, drying temperature and particular equipment employed, but typically will be from about 2 to about 6 hours or more. If drying is conducted for longer periods of time, such as overnight, the drying temperature should preferably be about 70° C to about 85° C. In general, any conventional drying procedure can be used to reduce the moisture content to below about 0.1 wt.%, based on the total weight of the polymer components of the blend, preferably below about 0.05 wt.%, and most preferably below about 0.01 wt.%.

If conventional additives such as those previously identified have not previously been added to the individual polymeric components of the blend during the processing of such components, i.e., before they are admixed with each other, they may be added at this time.

The admixture resulting from the blending procedure is then comminuted mechanically, for example by chopping, pelletizing or grinding, into granules, pellets, chips, flakes or powders, and processed in the thermoplastic state, for example by injection molding or extrusion molding into shaped articles, including bars, rods, plates, sheets, films, ribbons, tubes and the like. Preferably, the comminuted blend is dried again, in the manner discussed above, prior to being molded.

The amount of thermoplastic polyurethane and non-crystalline acetal copolymer in the final molding composition can be varied widely so long as they are lower in amount than the acetal polymer which is present in major amount, i.e., over 50 wt.%. For example, the compositions may comprise about 60 to 95, preferably about 65 to 90, wt.% of the crystalline acetal polymer, about 4 to 35 wt.%, preferably about 5 to 30 wt.%, of the thermoplastic polyurethane, and about 1 to 10 wt.%, preferably about 2 to 7 wt.%, of the non-crystalline acetal copolymer, all of the foregoing weight percents being based on the weight of the total polymeric components.

The blends of this invention are capable of yielding injection molded or extruded articles having improved morphology as compared with control blends which are similar in composition and processed in the same way, except that no non-crystalline acetal copolymer is utilized. Thus, extruded or molded articles made from the blends of this invention generally contain more uniform size and distribution of dispersed domains in the crystalline acetal polymer matrix, as indicated by an examination of the fractured surface of a molded or extruded article, than articles of the control blend. Such improved morphology usually results in articles having improved impact strength.

The following examples further illustrate the invention.

## Example 1

This example describes a blend under the invention of a crystalline acetal polymer, a thermoplastic polyurethane and a non-crystalline acetal terpolymer having elastomeric properties.

The crystalline acetal polymer was a copolymer of trioxane and ethylene oxide containing about 98 wt.% of recurring $-OCH_2-$ groups and about 2 wt.% of comonomer units derived from ethylene oxide and having the formula $-OCH_2CH_2-$. It was prepared as previously described herein and more specifically in the aforementioned U.S. Patent No. 3,027,352 to Walling et al., and was hydrolyzed to stabilize the ends of the polymer chains. The crystalline acetal polymer possessed a crystallinity of approximately 75 percent, a number average molecular weight of approximately 35,000, an inherent viscosity (IV) of approximately 1.3 (measured at 60° C in a 0.1 wt.% solution in p-chlorophenol containing 2 wt.% of alphapinene), a melting temperature of 165° C, and a melt index of approximately 2.5 g/10 min. when tested in accordance with ASTM method D1238-82.

The crystalline acetal polymer also contained, as a stabilizer package, 0.5 percent by weight of 1,6-hexamethylene bis-(3′,5′-di-t-butyl-4′-hydroxyhydrocinnamate) as antioxidant, sold by Ciba-Geigy Corp. under the trademark "Irganox 259," 0.1 percent by weight cyanoguanidine as a thermal stabilizer, and 0.2 percent by weight of N,N′-ethylene bisstearamide as mold lubricant sold by Glyco Chemical, Inc. under the trademark "Acrawax C." This acetal polymer composition is available from Hoechst Celanese Corporation under the trademark "Celcon M25-04", as previously described.

The thermoplastic polyurethane was a polyether-based polyurethane prepared by reacting 1.0 equivalent of polyoxytetramethylene glycol having a molecular weight of about 2000 with 1.5 equivalents of 1,4-butanediol and 2.63 equivalents of 4,4′-methylenebis(phenyl isocyanate) admixed with 0.25 percent by weight of N,N′-ethylene bisstearamide (lubricant) sold under the trademark "Advawax 280," by Cincinnati Milacron Chemical, Inc., 0.25 percent by weight of tetrakis [methylene 3-(e′,5′-di-tert-butyl-4′-hydroxyphenyl) propionate] methane (antioxidant) sold under the trademark "Irganox 1010," by Ciba-Geigy Corp., and 0.05% of stannous octoate (T-10). The weight percent of the additives are based on the total weight of the polyurethane reactants. This polyurethane composition is sold by Upjohn Company under the trademark "Pellethane X0157-75A."

The non-crystalline elastomeric acetal terpolymer was prepared by transferring 300 ml of dry, freshly distilled, molten trioxane under a nitrogen atmosphere to a half gallon reactor fitted with a magnetic stirrer which was previously purged with nitrogen. There were then added to the reactor under a nitrogen atmosphere 700 ml of dry 1,3-dioxolane and 1 ml of dry 1,4-butanediol diglycidyl ether (BDGE). The mixture was allowed to fall to room temperature (25° C). The catalyst for the reaction was p-nitrobenzenediazonium tetrafluoroborate (PNDB) which was initially added as 3 ml of a dry solution of 356 mg in 10 ml of nitromethane (0.45 x $10^{-3}$ M/l of catalyst). Before reaction started, 1 ml of the reaction mass was tested in a moisture meter and found to contain no water. Subsequently, an additional amount of PNDB as 2 ml of a solution of 1186 mg of the catalyst in 10 ml of nitromethane (1 x $10^{-3}$ M/l of catalyst) was added to the reactor.

After about 24 hours of polymerization, the stirrer was stopped and 700 ml of methylene chloride plus enough tributylamine to neutralize the catalyst were added and the reaction shaken for about 24 hours, after which some of the polymer remained undissolved. The solution was then removed from the reactor, and added to 1000 ml of cold ethanol and stirred with a mechanical shaft stirrer for 1-2 hours. The resulting two-phase mixture was placed in an ice bath and allowed to stand for two hours after which time solid polymer settled. The ethanol was decanted and the polymer dried in a vacuum oven. The elastomeric terpolymer contains about 32.0 mol % of polymerized trioxane, about 68.0 mol % of polymerized 1,3-dioxolane, based on the total of trioxane and dioxolane, and also contains about 0.1 wt.% of BDGE based on the weight of the copolymer. It has an inherent viscosity (IV) of over 2.

A blend of 90 wt.% of the foregoing thermoplastic polyurethane and 10 wt.% of the foregoing non-crystalline elastomeric acetal terpolymer was

first prepared by loading the two polymers, after drying at 75° C, in a Haake batch mixer equipped with roller blades, at 205-210° C for under 3 min., and blending the mixture at 214° C for 10 min. after the torque on the Haake mixer had become stabilized. This initial blend in an amount of 30 wt.% was then similarly blended with 70 wt.% of the foregoing crystalline acetal polymer in the Haake mixer at 217° C for 8 min. after loading to yield a final polymer blend containing 70 wt.% of the crystalline acetal polymer, 27 wt.% of the thermoplastic polyurethane and 3 wt.% of the non-crystalline, elastomeric acetal terpolymer.

The morphology of the blend was examined by extruding it at 190° C through the Gottefert Rheograph 2001 capillary viscometer using a die with D=1 mm. and L=10 mm. The extrudates at shear rate of about 1000 1/s were quenched and fractured at liquid nitrogen temperature both transverse to the direction of extrusion and along the direction of extrusion. The fracture surfaces were etched and examined by scanning electron micrography.

The morphology of the blend of this example was compared with that of similarly prepared control blend but not containing any non-crystalline elastomeric acetal copolymer and composed of 70 wt.% of the same crystalline acetal polymer composition, and 30% of the same thermoplastic polyurethane composition as present in the blend of this example. The morphology of the blend of the example in both lateral and longitudinal directions showed disperse domains which were finer and more uniform both at the core and near the skin of the sample than the morphology of the control blend. This indicates that the blend of example has better impact properties than the control blend.

## Example 2

This example describes a blend under the invention of a crystalline acetal polymer, a thermoplastic polyurethane, and a non-crystalline two-component acetal copolymer.

The crystalline acetal polymer was similar to that of Example 1 except that it had a melt index of about 9.0 g/10 min. It contained the same stabilizer package and is available from Hoechst Celanese Corp. as "CELCON M90-4."

The two-component non-crystalline acetal copolymer was prepared as follows:

A charge of 175 ml of 1,3-dioxolane and 75 ml of freshly distilled trioxane was injected into a clean, dry 500 ml round bottom flask which was purged with dry nitrogen gas and held at room temperature (about 25° C). Next, 1 × $10^{-3}$ mol/liter of p-nitrobenzenediazonium fluoroborate as a solution in nitromethane was injected into the flask. The monomer solution became viscous over an approximately 1.5 hour period. Polymerization was allowed to continue overnight.

The flask was then broken. at liquid nitrogen temperature and the viscous polymer mass removed and admixed with 200 ml of methylene dichloride in a 1000 ml beaker. This mixture was then allowed to shake for 24 hours on a shake table. The resulting viscous solution was added to 1000 ml of cold ethanol and stirred with a mechanical shaft stirrer at 400 rpm for 1-2 hours.

The resulting two-phase mixture was placed in an ice bath and let stand for 2 hours, after which time a white, viscous polymer mass settled. The ethanol was decanted and the polymer mass was then dried in a hood.

NMR analysis indicated that the polymer contained 23.6 mol % trioxane and 76.4 mol % 1,3-dioxolane. The polymer had a crystallization temperature of about 0° C and an IV of 2.35.

A blend of 90 wt.% of the stabilized thermoplastic polyurethane of Example 1 and 10 wt.% of the foregoing non-crystalline two-component acetal copolymer was prepared as described in Example 1 except that the polymers were loaded into the Haake mixer at a temperature in the range of 205-210° C for about 5 min. and then blended at about 210° C for 15 min. after the torque on the Haake mixer had become stabilized. This initial blend in an amount of 30 wt.% was then blended with 70 wt.% of the foregoing stabilized crystalline acetal polymer at 195° C for 10 min. after loading to yield a blend containing 70 wt.% of stabilized crystalline acetal polymer, 27 wt.% of stabilized thermoplastic polyurethane, and 3 wt.% of the non-crystalline, two-component acetal copolymer. The morphology of this blend was examined as described in Example 1 and was found to have relatively round and evenly distributed disperse domains in the lateral direction and stable elongated domains in the longitudinal direction, indicating very good impact properties.

## Example 3

In this example the non-crystalline acetal copolymer was a two-component copolymer prepared as described in Example 2 containing 64 wt.% of polymerized 1,3-dioxolane and 36 wt.% of polymerized trioxane and having a crystallization temperature of about 0° C and an IV of 1.01. A blend was prepared of 60 wt.% of the stabilized crystalline acetal polymer of Examples 1, 35 wt.% of the stabilized thermoplastic polyurethane of Example 1 and 5 wt.% of the foregoing non-crystalline two-component acetal copolymer by loading all the polymer into the Haake mixer at temperature of 205-210 °C for 5 min. and blending at 210 °C for an additional 15 min. after the torque on the Haake mixer had become stabilized.

The morphology of compression molded bars of the blend of this example was evaluated by solvent etching fracture surfaces and examining the etched surfaces by scanning electron micrography. It was found that the presence of the non-crystalline acetal copolymer dramatically altered the morphology from discrete spherical regions of polyurethane in a crystalline acetal polymer matrix to a cocontinuous two phase network. This blend with the altered morphology has very good impact properties.

Example 4

The procedure of Example 4 was followed except that the non-crystalline two-component acetal copolymer contained about 70 wt.% of polymerized 1,3-dioxolane and about 30 wt.% of polymerized trioxane and had a crystallization temperature of 0 °C and an IV of 1.75.

The morphology of compression molded bars of the blend of this example was examined as described in Example 3. The presence of the non-crystalline acetal copolymer resulted in a cocontinuous two phase network similar to that obtained in Example 3. This blend with such morphology has very good impact properties.

## Claims

1. A composition comprising a major amount of normally crystalline acetal polymer and lower amounts than said crystalline acetal polymer of a thermoplastic polyurethane and a normally non-crystalline acetal copolymer of monomers comprising about 15 to 45 mol % of trioxane and about 55 to 85 mol % of 1,3-dioxolane based on the total of trioxane and 1,3-dioxolane.

2. The composition of claim 1 wherein said non-crystalline acetal copolymer is an elastomeric terpolymer of said trioxane and 1,3-dioxolane and in addition about 0.005 to 0.15 wt.% of 1,4-butanediol diglycidyl ether or butadiene diepoxide as a bifunctional monomer, based on the total weight of non-crystalline copolymer.

3. The composition of claim 2 wherein said non-crystalline elastomeric acetal terpolymer is of monomers consisting of about 25 to 35 mol of trioxane, about 65 to 75 mol % of 1,3-dioxolane based on the total of trioxane and 1,3-dioxolane, and about 0.05 to 0.12 wt.% of 1,4-butanediol diglycidyl ether or butadiene diepoxide as a bifunctional monomer, based on the total weight of terpolymer.

4. The composition of claim 2 wherein said non-crystalline elastomeric acetal terpolymer contains polymerized 1,4-butanediol diglycidyl ether as bifunctional monomer.

5. The composition of claim 2 wherein said non-crystalline elastomeric acetal copolymer contains polymerized butadiene diepoxide as bifunctional monomer.

6. The composition of claim 1 wherein said non-crystalline acetal copolymer is a two-component copolymer of monomers consisting of said trioxane and 1,3-dioxolane.

7. The composition of claim 6 wherein said non-crystalline two-component acetal copolymer is of monomers consisting of about 25 to 35 mol % of trioxane and about 65 to 75 mol % of 1,3-dioxolane based on the total of trioxane and 1,3-dioxolane.

8. The composition of any of clalms 1-7 wherein said non-crystalline acetal copolymer has an inherent viscosity of about 0.7 to 2.75 measured at about 25 °C in a 0.2 wt.% solution in hexafluoroisopropanol.

9. The composition of any of claims 1-8 wherein said thermoplastic polyurethane is the reaction product of:

(i) 4,4′-methylenebis(phenyl isocyanate),

(ii) polyoxytetramethylene glycol having a molecular weight within the range of about 1500 to about 3000, and

(iii) at least one diol extender selected from the group consisting of aliphatic straight chain diols having from 2 to about 6 carbon atoms, bis(2-hydroxy-ethyl) ether of hydroquinone, and bis(2-hydroxy-ethyl) ether of resorcinol, said diol extender being used in the reaction within the amount of about 0.5 to about 2.5 equivalents of extender per equivalent of said polyoxytetramethylene glycol, and said phenyl isocyanate being used in the reaction in an amount such that the ratio of isocyanate groups to total hydroxyl groups is within the range of about 1.0:1.0 to about 1.08:1.0.

10. The composition of any of claims 1-9 wherein said crystalline acetal polymer contains at least 85% of recurring oxymethylene units in the polymer chain.

11. The composition of claim 10 wherein said crystalline acetal polymer is an oxymethylene homopolymer.

12. The composition of claim 10 wherein said crystalline acetal polymer is a copolymer containing 85 to 99.9% of recurring oxymethylene units and 0.1 to 15% of recurring oxy(higher)alkylene bits produced by the opening of a ring of a cyclic ether or cyclic formal during copolymerization.

13. The composition of claim 12 wherein said oxymethylene units are produced from trioxane and said oxy(higher)alkylene units are oxyethylene units produced from ethylene oxide during copolymerization.

14. The composition of any of claims 1-13 comprising about 60 to 95 wt.% of said crystalline acetal polymer, about 4 to 35 wt.% of said thermoplastic polyurethane, and about 1 to 10 wt.% of said non-crystalline acetal copolymer, based on the weight of the total polymeric components.

15. The composition of claim 14 comprising about 65 to 90 wt.% of said crystalline acetal polymer, about 5 to 30 wt.% of said thernoplastic polyurethane, and about 2 to 7 wt.% of said non-crystalline acetal copolymer, based on the weight of the total polymeric components.

16. A process of preparing the composition of any of claims 1- 14 comprising first mixing said polyurethane and non-crystalline acetal copolymer to form an initial blend and then mixing said initial blend with said crystalline acetal polymer to form the final composition.